# DEMANDE DE BREVET EUROPEEN

(11) **EP 3 225 110 A1**
(43) Date de publication de la demande: **04.10.2017**
(21) Numéro de dépôt: 17162853.0
(22) Date de dépôt: 24.03.2017
(51) Int. Cl.: A01M 1/02, A01M 1/10, A01M 1/20, A01M 3/00

(54) **PROCÉDÉ DE MANIPULATION D'INSECTES SOCIAUX VULNÉRANTS, EN VUE DE LA DESTRUCTION DE LEURS NIDS**

(30) Priorité: 31.03.2016 FR 1670144
(71) Demandeur: Jaillard, Benito, 34270 Les Matelles (FR)
(72) Inventeur: Jaillard, Benito, 34270 Les Matelles (FR)
(74) Mandataire: Hege, Frédéric

(57) **Abrégé**

La présente invention concerne un procédé de manipulation d'insectes sociaux vulnérants (1), de type guêpes ou frelons, en vue de la destruction de leurs nids comportant les étapes suivantes :
• capture de l'insecte (1),
• manipulation de l'insecte (1) jusqu'à l'immobiliser dans une position à plat, avec sa tête dégagée,
• dépose d'une solution insecticide, de préférence attractive, sur la tête ou dans le cou de l'insecte (1), entre l'arrière de la tête et l'avant du thorax,
• relâche de l'insecte (1).

La présente invention concerne encore un kit, spécialement conçu pour mettre en oeuvre le procédé selon l'invention.

## Description

La présente invention se situe dans le domaine de la lutte contre les insectes sociaux vulnérants et nuisibles de la famille des Hyménoptères, comme les guêpes ou les frelons. Elle concerne plus particulièrement un procédé et un dispositif permettant d'introduire une solution insecticide dans un nid d'insectes sociaux et ainsi de le détruire.

Les Hyménoptères sociaux, comme les fourmis, les abeilles, les guêpes ou les frelons, vivent en colonies. Ces colonies sont constituées d'individus divisés en castes, chaque caste jouant un rôle défini dans la colonie. La reine fonde la colonie puis pond des oeufs. Les ouvrières, asexuées, élèvent les larves et alimentent la colonie en nourriture. Les mâles et les gynes, sexuées, assurent la dissémination de l'espèce au-delà de la colonie. Le lien social est assuré par un transfert d'hormones entre individus induit par le comportement de "trophallaxie", c'est-à-dire le partage et l'échange de la nourriture rapportée au nid par les ouvrières entre tous les individus de la colonie. La reine est au centre du réseau social de la colonie. Sa mort entraîne la mort de la colonie. Tous les Hyménoptères sociaux sont pourvus d'un système vulnérant, c'est-à-dire d'un dard capable d'injecter du venin, ce qui est douloureux voire dangereux pour l'Homme.

Le frelon asiatique *Vespa velutina* (ce qui signifie "guêpe veloutée"), encore appelé "frelon à pattes jaunes", est un Hyménoptère social introduit accidentellement dans le Sud-Ouest de la France, sans doute avant 2004. Cette espèce s'est progressivement installée dans tout le Sud-Ouest du pays, et son aire d'extension atteignait en 2008 l'ensemble du territoire français et le Pays Basque espagnol. En Ille-et-Vilaine par exemple, on comptait 17, 56, 187, 1400 et sans doute plus de 3000 nids en 2011, 2012, 2013, 2104 et 2015, respectivement. En 2015, l'espèce était signalée au Portugal, en Espagne, en Belgique et en Allemagne. Le frelon asiatique *Vespa velutina* est donc une "espèce exotique envahissante" pour l'Union Européenne.

En France, en 2012 les pouvoirs publics classaient le frelon asiatique *Vespa velutina* dans la "liste des dangers sanitaires de deuxième catégorie pour l'abeille domestique *Apis mellifera* sur tout le territoire français". En 2013, ils complétaient leur dispositif par une interdiction, "sur tout le territoire national et en tout temps, (de) l'introduction volontaire de spécimens vivants du frelon à pattes jaunes *Vespa velutina*". Au 1er janvier 2016, l'Union Européenne promulguait une directive faisant obligation à tous les états membres de mettre en place dans les 18 mois un plan de lutte contre les "espèces exotiques envahissantes préoccupantes", *Vespa velutina* étant reconnue comme l'une d'entre elles.

Du point de vue biologique, le frelon asiatique *Vespa velutina* se distingue de son cousin européen *Vespa crabro* par plusieurs traits, dont deux nous intéressent ici.

D'une part, son nid est généralement construit à l'air libre au sommet de grands arbres, contrairement à son cousin européen qui vit dans des cavités préexistantes. De ce fait, le frelon asiatique vit aussi bien en ville qu'à la campagne, au contraire de son cousin européen qui se cantonne à la campagne. Son nid est aussi beaucoup plus volumineux et populeux : il peut accueillir plusieurs milliers d'individus, jusqu'à 15 000 individus. De ce fait, le frelon asiatique devient vite gênant et préoccupant, voire dangereux pour les populations. Ce comportement pose surtout problème en ville car les frelons asiatiques sont attirés par les nourritures sucrées et carnées. Ils fréquentent donc les marchés en plein air, les étals de boucherie et de fruits et légumes, et plus généralement les tables des particuliers lors de repas pris en plein air.

D'autre part, le frelon asiatique est un prédateur d'autres insectes qu'il chasse en se mettant en vol stationnaire devant sa proie, avant de fondre dessus et de la tuer. Les ruchers constituent d'importantes sources de proies pour les frelons. Lorsqu'un nid de frelons asiatiques s'installe à proximité d'un rucher, la présence des frelons en vol stationnaire devant l'entrée des ruches stresse les colonies d'abeilles qui ne s'alimentent alors plus normalement : les réserves s'épuisent, les reines arrêtent de pondre et les colonies s'effondrent par manque de nourriture et manque d'abeilles-ouvrières. Au prélèvement d'abeilles par les frelons s'ajoute donc un état de stress induit par leur présence qui peut être fatal aux colonies d'abeilles. Le frelon asiatique est donc un fléau pour les apiculteurs qui interpellent les pouvoirs publics depuis plus d'une décennie. C'est cette nuisance qui a conduit l'Union Européenne à le classer comme "espèce exotique envahissante préoccupante".

Le frelon oriental *Vespa orientalis* cause des problèmes similaires dans le sud-est de l'Europe et le nord-est de l'Afrique, et particulièrement en Italie du Sud. Le frelon-géant *Vespa mandarinia*, principalement présent en Asie, est aussi un prédateur d'autres insectes, d'abeilles en particulier. La présente invention concerne également la lutte contre ces deux espèces, ainsi que toute autre espèce d'insecte social dont on souhaite détruire les nids.

Les pouvoirs publics ont précisé les moyens de lutte autorisés contre le frelon asiatique. Il s'agit du piégeage et de la destruction des nids.

Le piégeage consiste en l'utilisation de dispositifs qui contiennent un appât attractif pour les frelons, et qui empêchent leur échappement une fois les frelons pris au piège. Ce mode de lutte est le plus pratiqué par les apiculteurs car il nécessite peu de savoir-faire et peu de matériel. Toutefois, il présente une efficacité limitée, car ne s'attaquant pas au nid des frelons il élimine les frelons un à un. Même lorsque le nombre de frelons piégés est élevé, la proportion de frelons piégés reste faible en regard du nombre de frelons qui devrait être éliminés.

La destruction des nids est réglementée et est pratiquée par des professionnels patentés. Elle nécessite un matériel important (perche télescopique, matériel de pulvérisation, drône télécommandé), une technicité importante (manipulation de gaz, de poudre ou de liquide insecticide) et un équipement adapté à une éventuelle attaque des frelons (intervention à proximité du nid). L'électrocution des frelons par une "harpe électrique" est également autorisée.

L'usage d'appât empoisonné est une autre solution possible. L'appât contient alors un insecticide rapporté au nid par les frelons et partagé entre les adultes suivant le principe de la trophallaxie propre aux insectes sociaux. L'insecticide peut être de la benzoylurée, un analogue d'une hormone juvénile qui a pour effet d'inhiber la fabrication de la chitine par les larves qui ne peuvent alors plus constituer leur exosquelette. L'usage de cette solution permet d'éteindre l'activité du nid en quelques jours, qu'il ait été localisé ou non. Toutefois, l'usage d'appât empoisonné a été interdit par la loi française car il est trop peu spécifique, et détruit indifféremment le frelon prédateur d'abeilles, que n'importe quel autre espèce d'insecte attirée par l'appât, y compris les abeilles elles-mêmes.

L'invention (le procédé) propose la séparation de ces deux fonctions, la fonction d'appât, l'appât n'a plus besoin d'être empoisonné, et la fonction insecticide, l'insecticide ne sert plus d'appât mais doit seulement être attractif pour les autres frelons restés au nid, pour leur être transmis par trophallaxie.

Le document FR3025978 propose de capturer un frelon, de l'anesthésier, puis de lui fixer une boite contenant un insecticide sur l'arrière du thorax, à l'aide d'un adhésif et d'une couche étanche, pour éviter que le produit n'entre en contact avec le frelon. Toutefois cela nécessite un dispositif complexe, et un procédé de mise en place qui l'est tout autant. Par ailleurs l'anesthésie est risquée, le frelon risquant de ne pas s'en réveiller.

La présente invention a pour objet de pallier au moins en partie aux inconvénients cités ci-dessus, en proposant de charger directement sur un frelon un insecticide, sans anesthésier le frelon.

La présente invention propose ainsi un procédé de manipulation d'insectes sociaux, de type guêpes ou frelons, en vue de la destruction de leur nid. Ce procédé est particulier en ce qu'il comporte les étapes suivantes :
- capture de l'insecte,
- manipulation de l'insecte jusqu'à l'immobiliser dans une position à plat, avec sa tête dégagée,
- dépose d'une solution insecticide, de préférence attractive, sur l'arrière de la tête de l'insecte,
- relâche de l'insecte.

Grâce à ces dispositions, un insecte peut être chargé en insecticide, puis l'insecticide introduit dans son nid et transmis à la reine et aux autres insectes du nid par trophallaxie du produit insecticide et attractif. Un nid d'insectes peut ainsi être détruit en répétant le procédé sur le nombre nécessaire d'insectes, ce nombre pouvant être faible, compris entre 1 et 10. L'insecte peut aussi être marqué pour identification, par une goutte de peinture par exemple, ou chargé d'un appareillage miniature de type étiquette radio-fréquence RFID qui permettra de localiser son nid à l'aide d'un interrogateur ou lecteur approprié. Un nid d'insectes ainsi localisé peut ensuite être détruit par un procédé classique. Des frelons marqués pourront être utilisés à des fins d'étude de comportement. Selon d'autres caractéristiques :
- la capture de l'insecte peut être réalisée par un moyen de capture, comportant un bonnet de filet, un arceau et un manche, et ledit procédé comporter une étape de soulèvement du bonnet de filet, puis de repliement du bonnet de filet sur l'arceau ; de telles étapes permettent de piéger l'insecte dans le filet sans risque de se faire piquer ; le risque est encore plus faible si le bonnet de filet est muni de languettes d'extrémité et latérales,
- l'insecte peut être appâté par une solution sucrée, soit qu'il vienne directement se nourrir de cette solution, soit que cette solution attire des insectes d'autres espèces que le frelon vient chasser. Il peut aussi être appâté par des produits carnés, viande ou poisson, qu'il viendra prélever pour nourrir ses larves. Il peut aussi être appâté par des brèches de cadres de cire d'abeilles, ou tout autre produit disponible et attractif.
- le procédé de destruction d'un nid d'insectes peut comporter une étape de déplacement de l'insecte du lieu de capture vers un lieu de manipulation après l'étape de capture de l'insecte, afin de ne pas exposer l'opérateur plus longtemps que nécessaire à un endroit fréquenté par les insectes, et de procéder à la manipulation dans un lieu propice à cette étape,
- la capture de l'insecte peut avoir lieu alors que l'insecte est en vol stationnaire, il est ainsi plus facile à capturer et il y a moins de risque pour l'opérateur d'être exposé à un insecte excité dont la capture aurait été manquée ; de plus cela permet de distinguer le type d'insecte à capturer, tous les insectes n'étant pas capables de vol stationnaire,
- la capture de l'insecte peut avoir lieu à proximité d'une ruche, ceci permettant d'augmenter les chances de capture car la ruche est un lieu connu pour attirer les insectes prédateurs d'abeilles, certains types d'insectes, comme le frelon asiatique, attendant alors couramment leurs proies en vol stationnaire devant l'entrée de la ruche.

La présente invention concerne également un kit spécialement conçu pour la mise en oeuvre d'un procédé selon l'invention. Ce kit est particulier en ce qu'il comporte un moyen de capture, un moyen de manipulation et un moyen de chargement.

Grâce à ces dispositions, l'opérateur dispose des moyens simples et efficaces pour mener à bien les différentes étapes du procédé.

Selon un autre mode de réalisation, le moyen de capture peut comprendre un bonnet de filet, un arceau et un manche. Il est facile à se procurer, il peut s'agir par exemple d'un filet à papillons ou d'une épuisette à crevettes.

Selon d'autres caractéristiques :
- ledit moyen de capture peut comprendre une languette d'extrémité et/ou des languettes latérales, la languette d'extrémité pouvant être utilisée pour relever le fond du bonnet de filet et inciter l'insecte à s'y diriger, et les languettes latérales pour immobiliser l'insecte dans le bonnet de filet replié sur l'arceau, tout cela sans toucher le bonnet de filet et risquer d'être piqué par l'insecte ; l'étape de manipulation est ainsi facilitée et sécurisée,
- ledit moyen de manipulation peut comprendre un guide ou plaque transparente, éventuellement muni d'un système de préhension ou poignée, permettant de déplacer l'insecte et de le maintenir en position couchée et tête découverte en vue de l'étape de chargement,
- ledit moyen de manipulation peut comporter un tube transparent disposé sur ledit moyen de capture, cette disposition permettant de combiner moyen de capture et moyen de manipulation et de simplifier le procédé,
- ledit moyen de manipulation peut comprendre un tapis de sol muni de picots ou fibres, et de couleur claire, proche du blanc, afin de disposer d'une surface permettant de maintenir l'insecte en position à plat sans le blesser, et offrant un bon contraste avec l'insecte afin de bien le distinguer,
- ledit moyen de chargement peut contenir un produit attractif et insecticide, en particulier un produit comprenant de la perméthrine et de l'alcool, en particulier comprenant en outre du miel, la perméthrine étant l'insecticide, l'alcool permettant au produit d'accrocher le velours qui recouvre l'insecte, et le miel assurant que le produit soit attractif pour l'insecte.

La présente invention sera mieux comprise à la lecture de la description détaillée qui fait suite, en référence aux figures annexées dans lesquelles :
- La figure 1 est une vue d'un moyen de capture selon l'invention.
- La figure 2 est une vue d'un moyen de capture selon un deuxième mode de réalisation de l'invention.
- La figure 3 est une vue du moyen de capture de la fig. 1 une fois le bonnet rabattu.
- La figure 4 est une vue du moyen de capture de la fig. 1 au cours de la deuxième étape de manipulation.
- Les figures 5 et 6 sont des vues d'un moyen de manipulation selon l'invention à deux stades successifs de l'étape de manipulation.
- Les figures 7 et 8 sont des vues d'un moyen de manipulation selon un deuxième mode de réalisation de l'invention.

Dans la description qui suit, on décrira l'invention en utilisant le terme "frelon", ce terme correspondant à l'espèce du frelon asiatique, *Vespa velutina.* Il est cependant possible d'utiliser les dispositif et procédé décrits ci-après dans le cadre des luttes contre le frelon oriental *Vespa orientalis* et contre le frelon-géant *Vespa mandarinia*, ainsi que d'autres insectes sociaux vulnérants et préoccupants, sans sortir du cadre de la présente invention.

Les ruches constituent d'importantes sources de proies pour les frelons. Ces derniers se mettent en vol stationnaire devant les ruches avant de capturer les abeilles qui rentrent à ou sortent de la ruche. On tire avantage de ce comportement en capturant les frelons en vol stationnaire devant les entrées de ruches. La capture des frelons en vol stationnaire devant une ruche permet de s'assurer qu'on capture un frelon asiatique. Les frelons asiatiques sont capables de vol stationnaire, ce qui les distingue des frelons européens : cette particularité comportementale les identifie, et les rend particulièrement vulnérables et faciles à capturer.

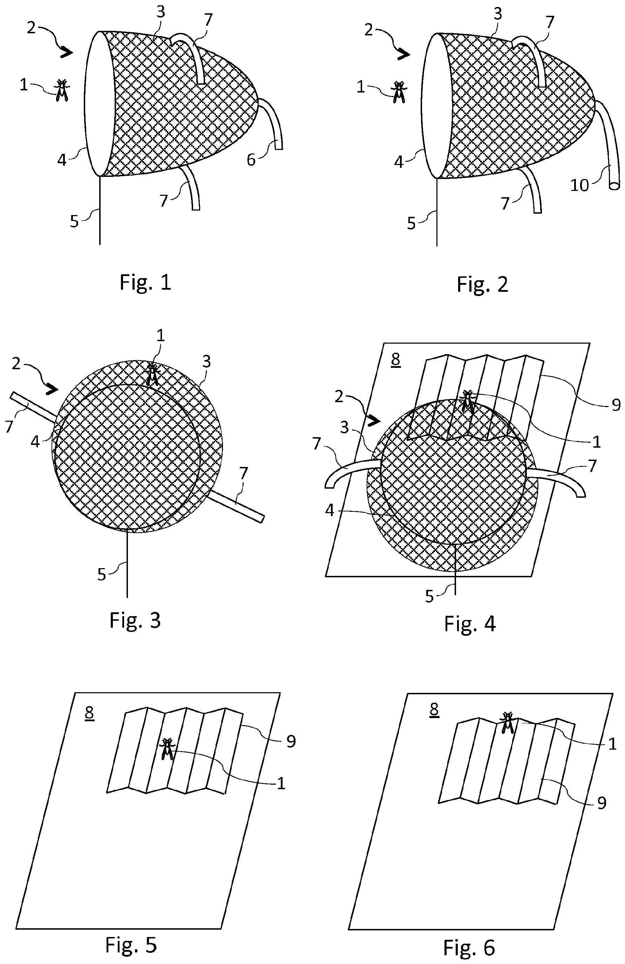

Comme illustré à la fig. 1, un frelon 1 se trouve en vol stationnaire à proximité d'un appât sucré ou carné, ou d'une ruche, attendant qu'une abeille sorte ou rentre, pour la capturer. Il est ainsi aisé d'attraper le frelon 1 par un moyen de capture 2, par exemple de type filet à papillons ou épuisette à crevettes et muni d'un bonnet de filet 3, monté sur un arceau 4 et tenu par un manche 5. La maille du bonnet de filet 3 est suffisamment serrée pour emprisonner le frelon 1, mais elle doit être suffisamment lâche pour permettre de le visualiser une fois capturé. Le bonnet de filet 3 doit être suffisamment profond pour que, une fois replié sur l'arceau 4, son extrémité dépasse l'arceau 4 rigide de quelques centimètres. Mais il ne doit par être trop profond pour éviter que l'opérateur ne perde du temps à localiser le frelon 1 dans le bonnet de filet 3. Selon un mode de réalisation préférée, le bonnet de filet 3 a une maille de 2 à 2,5 mm environ, et une fois replié sur l'arceau 4, l'extrémité du bonnet de filet 3 dépasse de l'arceau 4 de 5 à 10 cm environ. Le bonnet de filet 3 est de préférence noir, afin de limiter les phénomènes de diffraction de la lumière qui causeraient des difficultés à l'opérateur. Selon un autre mode de réalisation préféré, le bonnet peut comprendre également une languette d'extrémité 6, et deux languettes latérales 7. Leur utilité est décrite plus loin. L'arceau 4 peut être circulaire ou rectangulaire, dégageant une ouverture de 15 à 25 cm de diamètre environ. Le manche 5 est de préférence court, par exemple de 30 à 50 cm de longueur, pour permettre une manipulation précise du filet.

D'autres moyens de capture peuvent être envisagés, comme par exemple un piège comportant un appât.

Les frelons peuvent être appâtés par toutes solutions ou substances attractives pour eux :
- des solutions sucrées, sirop de sucre ou miel : la solution sucrée peut les attirer directement si les frelons ont alors besoin de sucre pour développer leur nid. Les frelons sont alors capturés alors qu'ils consomment l'appât. Elle peut aussi attirer des insectes d'autres espèces que le frelon viendra alors chasser en se mettant en vol stationnaire devant l'appât. Les frelons sont alors capturés alors qu'ils sont en vol stationnaire. L'appât peut consister en une assiette remplie de solution sucrée (sirop de sucre ou miel) posée sur une table, ou mieux à même le sol.
- des produits carnés, viande ou poisson : les produits carnés attirent les insectes prédateurs, guêpes et frelons, qui viennent directement prélever de la viande pour nourrir leurs larves. Les frelons sont alors capturés alors qu'ils consomment l'appât.
- des produits de la ruche, cadre de miel, cadre de vieille cire, avec miel et propolis: ces produits de la ruche attirent les abeilles et les frelons, soit directement si les frelons ont alors besoin de sucre pour développer leur nid, soit indirectement si les frelons viennent alors chasser les abeilles. Les frelons sont alors capturés soit directement, soit alors qu'ils sont en vol stationnaire.

Quelque soit le moyen de capture 2 utilisé, il est important de capturer le frelon 1 sans le blesser, sans ni le frapper ni lui froisser les ailes en particulier, de sorte qu'il restera capable de rejoindre son nid ultérieurement.

L'arceau 4 est plaqué au sol (voir fig. 3) pour empêcher le frelon 1 de se libérer. L'instant de surprise passé, le frelon 1 reprend son envol et vient se placer au fond du bonnet de filet 3 que l'opérateur a soulevé à l'aide de la languette d'extrémité 6. L'opérateur peut alors replier le bonnet de filet 3 sur l'arceau 4, comme représenté en fig. 3. Les languettes latérales 7 peuvent permettre à l'opérateur d'emprisonner le frelon 1 dans le bonnet de filet 3, et de le replier sur l'arceau 4 sans risque de se faire piquer par le frelon 1.

Le frelon 1 se trouve alors emprisonné dans la poche constituée par l'extrémité du bonnet de filet 3 qui dépasse de l'arceau 4, et l'arceau 4 lui-même. L'opérateur peut ainsi s'éloigner du lieu de capture, appât ou rucher, avec le frelon 1 capturé, sans risque de le laisser s'échapper.

L'étape de capture est terminée, et l'opérateur enchaîne avec la manipulation du frelon 1, jusqu'à ce qu'il soit en position favorable pour pouvoir le charger de solution d'insecticide, de le marquer ou de lui fixer un appareillage.

L'arceau 4 peut à nouveau être plaqué au sol, par exemple sur un tapis de sol 8. Le tapis de sol 8 peut être le sol enherbé lui-même, à condition que l'herbe soit assez rase. Il peut être toute surface lisse comme une plaque ou une table, mais une telle surface accélère le mouvement du frelon 1. Selon un mode de réalisation préférée, le tapis de sol 8 est constitué d'une sorte de gazon artificiel de fibres ou de picots de plastique, d'une épaisseur suffisante (7-11 mm) pour permettre que le frelon 1 s'y incruste lorsque l'opérateur exerce une légère pression verticale sur le frelon 1 : le frelon 1 est alors incapable de se mouvoir, et il peut être immobilisé par une légère pression. Le tapis de sol 8 est de préférence blanc, ou au moins bien clair, afin de bien voir le frelon 1 en contraste.

Tout d'abord, comme illustré en fig. 4 et 5, le frelon 1 emprisonné dans l'extrémité du bonnet de filet 3 est incité par l'opérateur à sortir du bonnet de filet 3 au niveau de l'arceau 4. L'opérateur peut utiliser les languettes latérales 7 pour manipuler le bonnet de filet 3 de sorte à guider le frelon 1 vers la sortie sous l'arceau 4. L'opérateur place alors au-dessus de l'arceau 4 un guide 9, par laquelle l'opérateur maîtrisera les déplacements du frelon 1.

Le guide 9 peut être constitué d'un matériau suffisamment transparent pour permettre à l'opérateur de suivre les déplacements du frelon 1, et suffisamment souple pour permettre à l'opérateur de ralentir ou d'orienter la progression du frelon 1 en modulant la pression exercée sur le guide 9. Il est préférable que le guide 9 soit suffisamment résistant pour protéger l'opérateur des éventuelles piqûres du frelon 1.

Dans un mode préféré de réalisation représenté aux fig. 4 à 6, le guide 9 est préalablement pliée en plis parallèles, ce qui oriente les déplacements du frelon 1 et facilite sa manipulation. Selon un autre mode de réalisation non représenté, le guide 9 est préalablement plié en éventail, les plis convergeant donc vers un point focal, qui sera le point d'immobilisation du frelon 1.

L'objectif est ensuite d'arriver à l'étape de la fig. 6, dans laquelle le frelon 1 est immobilisé dans une position telle que sa tête se trouve dégagée, tandis que son thorax et son abdomen se trouvent maintenus sous le guide 9. Pour ce faire, l'opérateur modère la vitesse de déplacement du frelon 1 en modulant la pression exercée sur le guide 9.

Le guide 9 peut comporter diverses poignées, aidant à la manipulation du frelon 1.

Selon un autre mode de réalisation, l'arceau 4 peut présenter des ondulations à même de laisser passer le frelon 1 sous l'arceau 4. L'arceau 4, associé au bonnet de filet 3, peut alors servir directement de moyen de manipulation. Le frelon 1 est alors immobilisé dès que sa tête sort de l'arceau 4.

Selon un autre mode de réalisation illustré en fig. 2, l'extrémité du bonnet de filet 3 du moyen de capture 2 peut recevoir un tube 10, souple et transparent. Après la capture du frelon 1, la manipulation consistera à inciter le frelon 1 à s'introduire dans ce tube 10, et là encore à contrôler sa progression jusqu'à ce que sa tête sorte du tube 10, puis à l'immobiliser dans cette position.

L'ensemble tapis de sol/guide doit présenter une certaine souplesse pour manipuler et immobiliser le frelon 1. Cette souplesse peut provenir soit du tapis de sol 8 (tapis de sol très souple genre gazon artificiel associé à un guide rigide) soit du guide 9 (guide sous forme de feuille plissée donnant de la souplesse associé à un tapis de sol rigide, comme décrit ci-dessus).

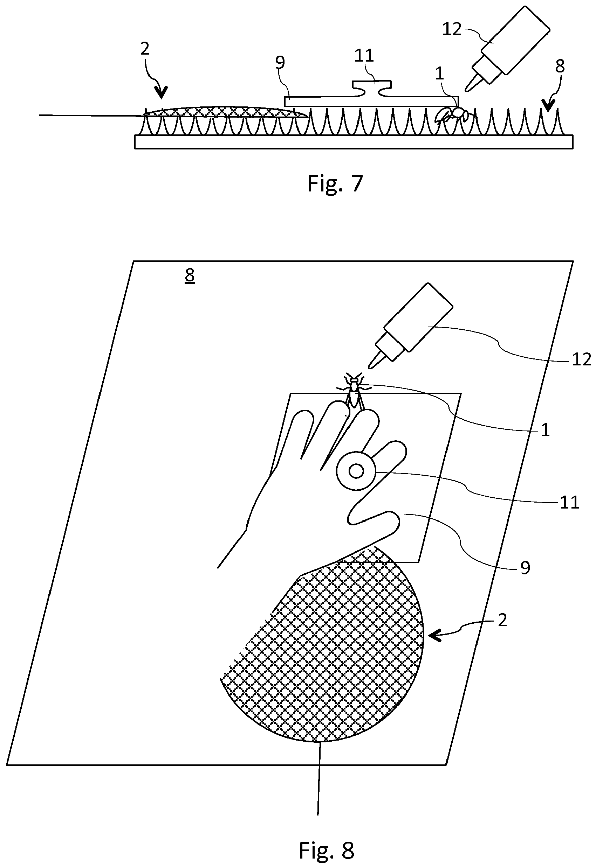

Un système de guide 9 rigide sous forme d'une plaque de PVC transparent associé à un tapis de sol souple de type gazon artificiel donne également de bons résultats. La plaque de PVC peut être dotée d'un manche central 11, vertical, avec buttée en plateau, qui permet de le saisir/dessaisir très rapidement en plaçant le manche central 11 entre le majeur et l'index (comme sur une "tongue", voir fig. 7 et 8).

D'autres moyens de manipulation peuvent convenir, qui permettent d'amener le frelon 1 dans une position où il est immobilisé, avec sa tête dégagée pour l'étape de chargement.

Enfin, un moyen de chargement 12, illustré dans un mode de réalisation en fig. 8, est utilisé afin de charger le frelon 1 en solution insecticide. Le moyen de chargement 12 comprend une fiole, burette ou compte-goutte susceptible de délivrer une solution visqueuse en quantité mesurée et de la positionner avec précision. La solution doit être attractive pour induire la trophallaxie entre frelons adultes. Une goutte de solution insecticide est déposée sur la tête du frelon 1, entre ses antennes, ou mieux juste derrière la tête, entre la tête et le thorax. Il est impératif de ne pas mouiller les ailes, car le frelon 1 perdrait alors sa capacité de vol. Une fois la solution insecticide déposée, le frelon 1 est relâché.

La solution insecticide peut consister en un produit sucré, donc attractif, chargé d'un insecticide. La toxicité et la concentration en insecticide doivent répondre à deux critères: ne pas tuer ni altérer immédiatement la vitalité des frelons de manière à ce qu'ils puissent introduire l'insecticide dans le nid ; tuer la reine avec une quantité d'insecticide pouvant être transportée au nid par un nombre limité de frelons, voire un seul frelon.

L'insecticide peut être minéral, organique ou biologique. On peut prendre des insecticides organiques de la famille des pyréthrinoïdes de synthèse.

Des insecticides biologiques, virus, agents microbiens ou nématodes, peuvent être introduits dans les nids par la même méthode.

La solution sucrée peut être du miel. La solution insecticide est de préférence alcoolisée pour lui permettre de "mouiller" le velours qui recouvre le frelon 1, et aussi parce que la perméthrine n'est pas soluble dans l'eau.

L'alcool diminue la tension superficielle du miel et favorise donc la mouillabilité du produit. C'est un agent surfactant. On peut y ajouter un extrait alcoolique de propolis, cela rend le produit encore plus attractif pour les frelons (odeur du miel + cire + propolis). On peut par exemple utiliser une concentration de 5 cl d'alcool de cire et propolis par litre de solution insecticide.

L'invention permet donc de détruire un nid de frelons par injection d'une solution insecticide introduit par les frelons eux-mêmes, désignés ci-dessus par l'appellation frelon 1. Le frelon chargé en solution insecticide est relâché pour qu'il retourne au nid, et qu'il y introduise la solution insecticide. Le mode d'action de la solution insecticide dans le nid est sa diffusion à la reine et aux autres adultes par trophallaxie, ce qui entraîne la mort de l'une et des autres, et finalement la destruction du nid.

L'application de l'invention dans la lutte contre les frelons comporte l'avantage d'être spécifique à l'espèce de frelon ciblée, puisque les frelons étant chargés de solution insecticide un à un, il est aisé pour un opérateur qualifié de sélectionner les individus de l'espèce ciblée. Le procédé selon l'invention ne comporte donc aucun risque d'altération de l'entomofaune locale.

Le procédé selon l'invention ne nécessite pas que les nids de frelons soient préalablement repérés. Elle n'est donc pas concurrente de la destruction ciblée des nids de frelons préalablement repérés. Elle vient la compléter en agissant avant que les nids ne soient repérés, ou une fois les nids repérés s'ils sont jugés inaccessibles par d'autres moyens de lutte.

L'application de l'invention dans la lutte contre les frelons comporte l'avantage d'être sécurisée, puisque l'opérateur intervient dans un lieu choisi à sa convenance, ou dans un rucher, à distance du nid ou des nids de frelons à détruire. Les frelons en chasse à bonne distance de leur nid ne manifestent alors aucun comportement agressif vis-à-vis de l'opérateur, et leur manipulation sous le guide 9 ne présente aucun danger.

Le procédé selon l'invention permet une utilisation optimale d'insecticide, puisqu'il est possible d'évaluer le nombre de frelons à charger en solution insecticide afin d'introduire dans le nid la quantité nécessaire et suffisante pour tuer les reines et détruire les nids. Le nombre de frelons à charger en solution-insecticide dépend de la nature et de la concentration de l'insecticide, et du nombre de nids de frelons ciblés. Le nombre de nids peut être préalablement évalué par l'observation des directions de retour des frelons qui viennent chasser les abeilles, et lors du traitement par l'observation des directions de retour des frelons chargés d'insecticide. Il peut par exemple être suffisant de charger 5 à 10 frelons par nid, ce qui peut correspondre à 0,25 à 0,50 µg d'insecticide. Même un seul frelon peut suffire, mais on court le risque que ce frelon n'arrive pas au nid pour différentes raisons, d'où une préférence pour un traitement de plusieurs frelons par nid.

Le procédé selon l'invention permet une utilisation très parcimonieuse d'insecticide. La méthode classique de destruction ciblée de nid de frelons par injection d'insecticide à l'aide d'une canne utilise deux cuillères à soupe de produit à 5 g d'insecticide par kg, soit environ 120 mg d'insecticide ; cette quantité correspond à des quantités d'insecticide 2400 à 4800 fois plus élevées que dans le procédé selon l'invention. La quantité préconisée par plusieurs fabricants de produits insecticide est d'utiliser 1 kg de matière à 0,5% d'insecticide pour détruire un nid de frelons, soit 5 g d'insecticide par nid ; cette quantité préconisée correspond à des quantités d'insecticide 20 000 fois plus élevées que dans le procédé selon l'invention. De plus, avec la méthode selon l'invention tout l'insecticide reste confiné dans le nid, et ne se répand pas à l'entour. D'autre part, le procédé peut être qualifié d'écologique si l'insecticide utilisé est un agent biologique insecticide.

Il est préférable d'appliquer le procédé selon l'invention le plus tôt possible en saison pour limiter la taille des nids ciblés, donc le nombre de frelons et la quantité d'insecticide à introduire par nid. L'action doit se dérouler en une seule journée pour introduire en un minimum de temps la quantité d'insecticide nécessaire pour tuer au moins les reines des nids ciblés. Le nombre de frelons à capturer et charger en insecticide dans la journée dépend du nombre de nids de frelons ciblés : il sera d'autant plus faible que le traitement se déroulera tôt en saison. L'action peut être programmée dès que les frelons se succèdent à l'entrée des ruches, et que l'on peut envisager de capturer un nombre suffisant de frelons dans la journée. Lorsque les frelons sont nombreux à l'entrée des ruches, les colonies d'abeilles sont stressées et forment la "barbe" à l'entrée des ruches, c'est-à-dire que de très nombreuses abeilles viennent couvrir la planche d'envol pour défendre la ruche. Cet état peut s'observer dès la mi-juillet. Ce peut être un indice pour déclencher l'action contre les frelons.

Selon un mode alternatif de réalisation de l'invention, après immobilisation de l'insecte, celui-ci peut être marqué pour identification à l'aide d'un peinture de couleur, ou chargé d'un appareillage miniature de type étiquette radio-fréquence RFID fixé sur son thorax. De retour dans son nid, l'insecte peut alors être localisé à l'aide d'un interrogateur ou lecteur approprié. Un nid d'insectes localisé peut ensuite être détruit par un procédé classique. Le marquage des insectes peut être utilisé à d'autres fins, comme l'étude de leur comportement de prédation.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Procédé de manipulation d'insectes sociaux vulnérants (1), de type guêpes ou frelons, en vue de la destruction de leurs nids, **caractérisé en ce qu'**il comporte les étapes suivantes :
• capture de l'insecte (1),
• manipulation de l'insecte (1) jusqu'à l'immobiliser dans une position à plat, avec sa tête dégagée,
• dépose d'une solution insecticide, de préférence attractive, sur la tête ou dans le cou de l'insecte (1), entre l'arrière de la tête et l'avant du thorax,
• relâche de l'insecte (1).

2. Procédé selon la revendication précédente, dans lequel la capture de l'insecte est réalisée par un moyen de capture (2) comportant un bonnet de filet (3), un arceau (4) et un manche (5), et ledit procédé comporte une étape de soulèvement du bonnet de filet (3), puis de repliement du bonnet de filet (3) sur l'arceau (4).

3. Procédé selon l'une des revendications précédentes, comportant en outre une étape de déplacement de l'insecte (1) du lieu de capture vers un lieu de manipulation après l'étape de capture de l'insecte (1).

4. Procédé selon l'une des revendications précédentes, dans lequel la capture de l'insecte (1) a lieu alors que l'insecte (1) est en vol stationnaire.

5. Procédé selon l'une des revendications précédentes, dans lequel la capture de l'insecte (1) a lieu à proximité d'une ruche.

6. Kit spécialement conçu pour la mise en oeuvre d'un procédé selon l'une des revendications précédentes, **caractérisé en ce qu'**il comporte un moyen de capture (2), un moyen de manipulation et un moyen de chargement (12).

7. Kit selon la revendication précédente, dans lequel le moyen de capture (2) comprend un bonnet de filet (3), un arceau (4) et un manche (5).

8. Kit selon l'une des revendications 6 ou 7, dans lequel ledit moyen de capture comprend une languette d'extrémité (6) et/ou des languettes latérales (7).

9. Kit selon l'une des revendications 6 à 8, dans lequel ledit moyen de manipulation comprend un guide (9) transparent.

10. Kit selon l'une des revendications 6 à 8, dans lequel ledit moyen de manipulation comporte un tube (10) transparent disposé sur ledit moyen de capture (2).

11. Kit selon l'une des revendications 6 à 10, dans lequel ledit moyen de manipulation comprend un tapis de sol (8) muni de fibres ou de picots, en particulier de couleur claire, proche du blanc.

12. Kit selon l'une des revendications 6 à 11 dans lequel ledit moyen de chargement (12) contient un produit attractif et insecticide.

13. Kit selon la revendication précédente, dans lequel ledit produit attractif et insecticide comprend de la perméthrine et de l'alcool.

14. Kit selon l'une des revendications 12 ou 13, dans lequel ledit produit attractif et insecticide comprend du miel.
